# FASCICULE DE BREVET EUROPEEN

(11) **EP 3 522 334 B1**
(45) Date de publication et mention de la délivrance du brevet: **31.03.2021**
(21) Numéro de dépôt: 19154978.1
(22) Date de dépôt: 01.02.2019
(51) Int. Cl.: H02K 1/18, H02K 15/02, H02K 1/30

(54) **CIRCUIT MAGNÉTIQUE POUR ÉLÉMENT DE MACHINE ÉLECTRIQUE TOURNANTE, PROCÉDÉ ET MACHINE ÉLECTRIQUE ASSOCIÉS**
MAGNETSCHALTKREIS FÜR ELEMENT EINER ELEKTRISCH UMLAUFENDEN MASCHINE, ENTSPRECHENDES VERFAHREN UND ENTSPRECHENDE ELEKTRISCHE MASCHINE
MAGNETIC CIRCUIT FOR ELEMENT OF A ROTATING ELECTRIC MACHINE, ASSOCIATED METHOD AND ELECTRIC MACHINE

(30) Priorité: 02.02.2018 FR 1850895
(43) Date de publication de la demande: 07.08.2019
(73) Titulaire: GE Energy Power Conversion Technology Ltd., Warwickshire CV21 1BU (GB)
(72) Inventeur: GALMICHE, Christophe, 54250 CHAMPIGNEULLES (FR)
(74) Mandataire: Casalonga

(56) Documents cités:
- JP-B2- 2 937 320
- US-A1- 2008 042 514
- US-A1- 2015 222 153

## Description

La présente invention concerne un dispositif de compression et de retenue des tôles magnétiques incorporées dans un rotor feuilleté et un stator feuilleté d'une machine électrique. La présente invention concerne également une machine électrique tournante comprenant un tel dispositif et un procédé de fabrication d'un tel rotor et stator.

Le stator feuilleté et/ou le rotor feuilleté d'une machine électrique tournante comportent un empilement de tôles magnétiques de forme sensiblement circulaire maintenues entre elles par des tirants ou des barreaux. Les tirants, barres ou barreaux compactent et maintiennent les tôles magnétiques. Les tôles magnétiques statoriques et rotoriques comportent un évidement en leur centre destiné à recevoir respectivement le rotor et l'arbre de la machine électrique tournante.

Les tôles magnétiques rotoriques et statoriques sont empilées dans une direction axiale, c'est-à-dire selon la direction de l'arbre de la machine tournante électrique, compactées dans la direction axiale, et maintenues dans la direction axiale et la direction radiale pour empêcher que les tôles bougent notamment sous l'effet du couple généré par la machine électrique, sous l'effet des attractions magnétiques entre le rotor et le stator, et sous l'effet des vibrations et des forces pulsées.

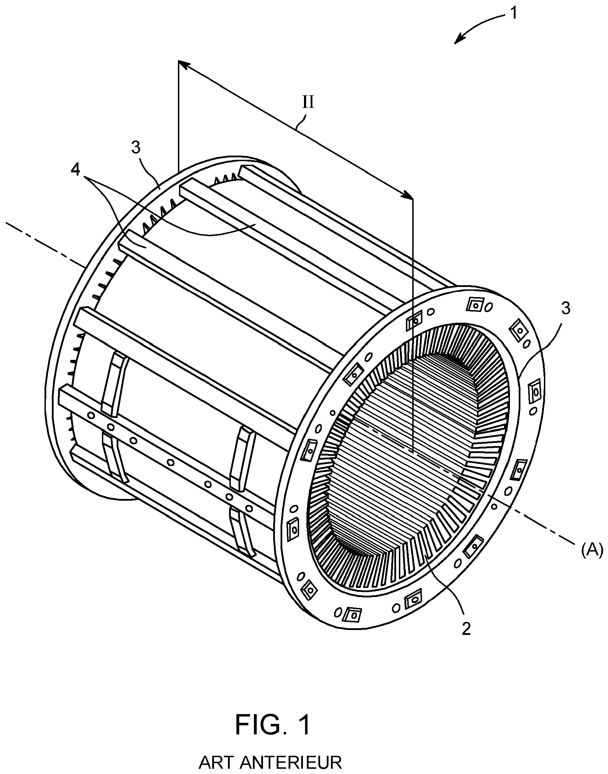

On a représenté à la figure 1 un exemple de stator 1 feuilleté d'une machine électrique connu de l'état de la technique comportant un axe de révolution (A).

Le stator a par exemple une masse de 1 à 50 tonnes et un diamètre extérieur de 0.5 à 5 mètres. Suite au compactage des tôles magnétiques, la longueur du stator est typiquement diminuée de 5 à 15 mm.

Le stator 1 comprend des paquets de tôles magnétiques 2 compactés entre deux plateaux de serrage 3 disposés de part et d'autre du stator et reliés par des barres de retenue 4.

Les plateaux 3 et les barres 4 formant la carcasse du stator maintiennent les paquets de tôles compactés.

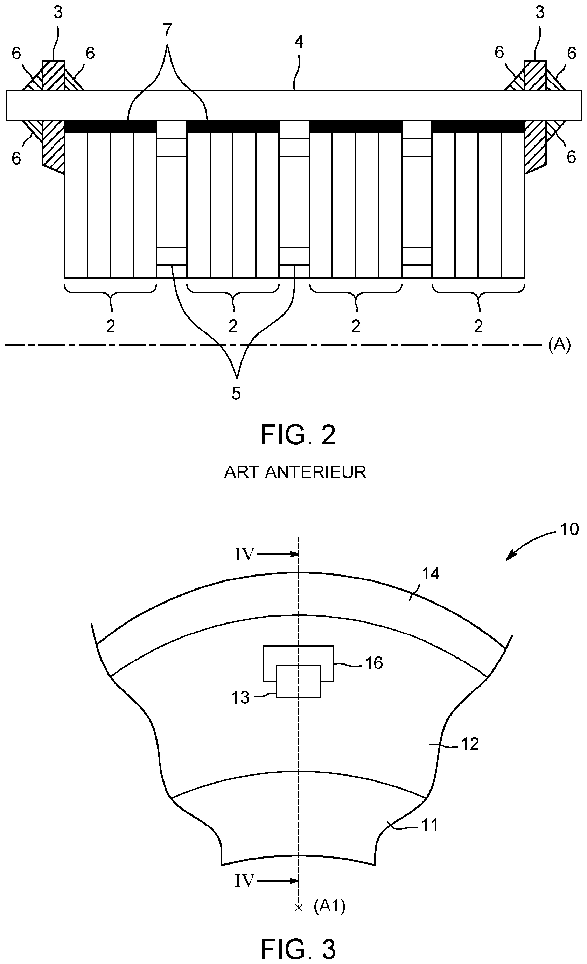

On se réfère à présent à la figure 2 qui représente schématiquement une coupe du stator 1 selon le plan de coupe II jusqu'à l'axe (A).

On reconnaît les paquets de tôles 2, les plateaux de serrage 3 et une barre de retenue 4.

Les paquets de tôles 2 sont séparés par des distanceurs 5 formant des canaux de ventilation.

Afin de maintenir la précontrainte exercée par la carcasse sur les tôles magnétiques, la barre 4 et les plateaux 3 sont soudés ensemble lorsque les tôles 2 sont compactées. Les soudures 6 empêchent un mouvement axial et un décompactage des tôles 2.

Les paquets de tôles 2 peuvent être soudés sur la barre 4 de sorte à empêcher un mouvement radial des tôles 2. Les tôles 2 sont solidarisées aux barres 4 par des soudures 7.

Dans le cas d'un rotor, non représenté, les tôles magnétiques sont enserrées entre deux plateaux de serrage maintenus par des barres comme décrit précédemment. Les tôles magnétiques sont solidaires de l'arbre, elles sont par exemple assemblées par frettage ou par clavetage sur l'arbre de la machine tournante.

On pourra à cet égard se référer aux documents EP2642646, US9263921 et GB322829 qui décrivent des barres de retenue soudées directement aux plateaux de serrage comme décrit précédemment ou des plateaux de serrage clavetés sur des barres soudées à la carcasse d'une machine électrique tournante.

Cependant les opérations de soudage requièrent la manipulation du stator. Cette opération est complexe pour un stator qui pèse par exemple 50 tonnes et a un diamètre extérieur de 5 mètres.

De plus les grattons de soudure résultant des opérations de soudage sont susceptibles de se loger dans les canaux de ventilation et d'endommager les bobinages de la machine tournante en fonctionnement. Pour diminuer les risques associés aux grattons de soudure, il est nécessaire d'obstruer les canaux de ventilation par exemple en les bourrant de cordelettes. Cette opération de préparation de soudage est fastidieuse et coûteuse en temps.

Un autre dispositif de compactage et de maintien connu de l'état de la technique comprend des plateaux de serrage enserrant les tôles magnétiques, et des tirants traversant les tôles et reliant les plateaux de serrage par des vis ou des écrous disposés aux extrémités des tirants.

On pourra également se référer au document WO2017/086192 qui décrit un dispositif de compactage et de maintien des tôles magnétiques comprenant une vis de serrage se substituant aux soudures.

Les documents GB328661 et GB660942 décrivent un dispositif de compactage et de maintien des tôles magnétiques comprenant des plateaux de serrage emboîtés dans des gorges ou épaulements situés dans la carcasse Le document US 2008/042514 aussi décrit un dispositif de maintien des tôles magnétiques.

Cependant les dispositifs de maintien des tôles magnétiques connus de l'état de la technique sont pour certains non démontables, nécessitent des opérations de manutention complexes, des opérations de soudure complexes.

La plupart des dispositifs selon l'état de la technique présentent l'inconvénient d'un réglage unitaire de la tension de compactage, et nécessitent une opération de décompactage et compactage des tôles lors d'un changement d'élément de la carcasse du stator ou d'un changement de l'arbre du rotor de la machine tournante.

Il est donc proposé de pallier les inconvénients liés aux dispositifs de maintien et de compactage des tôles magnétiques d'un rotor feuilleté et/ou d'un stator feuilleté selon l'état de la technique.

Au vu de ce qui précède l'invention propose, selon un aspect, un circuit magnétique pour élément de machine électrique tournante comprenant une pluralité d'empilements de tôles magnétiques compactées selon une direction axiale et enserrées entre deux plateaux de serrage reliés par des barres de retenue amovibles, au moins un plateau de serrage comprenant autant d'ouvertures que de barres de retenue amovibles.

Selon une caractéristique générale de ce circuit magnétique, les ouvertures du au moins un plateau de serrage et au moins une extrémité de chaque barre de retenue sont configurées pour coopérer de manière que l'extrémité de chaque barre de retenue s'emboîte sur un rebord de l'ouverture.

Selon une autre caractéristique, au moins une extrémité de la barre comporte une gorge coopérant avec une ouverture du au moins un plateau de serrage pour maintenir les tôles magnétiques compactées selon la direction axiale.

Selon une autre caractéristique, au moins une extrémité de la barre comporte une gorge coopérant avec une ouverture du au moins un plateau de serrage pour maintenir les tôles magnétiques compactées selon la direction axiale.

De préférence, la barre s'emboîte selon une direction radiale sur un rebord de l'ouverture.

Avantageusement, la barre s'emboîte selon une direction perpendiculaire à la direction radiale sur un rebord de l'ouverture.

Selon un autre mode de réalisation, le circuit magnétique comporte en outre une deuxième ouverture dans le plateau de serrage et au moins une deuxième barre de retenue identique à la barre de retenue coopérant avec une ouverture du au moins un plateau de serrage pour maintenir les tôles magnétiques compactées selon une direction axiale, les barres s'emboîtant selon des directions perpendiculaires à la direction radiale et opposées l'une par rapport à l'autre.

Selon un autre mode de réalisation, la barre de retenue comprend entre ses deux extrémités une partie centrale et chaque tôle magnétique comprend au moins une échancrure configurée pour accueillir la partie centrale de façon que les tôles magnétiques soient immobilisées dans une direction radiale et en rotation selon la direction axiale.

De préférence, la barre de retenue comprend à au moins une de ses extrémités une gorge coopérant avec une ouverture du plateau de serrage pour maintenir les tôles magnétiques compactées selon la direction axiale, et comprenant au moins une cale configurée de sorte que lorsque la cale est enfoncée selon la direction axiale entre la barre de retenue et un bord de l'ouverture, la partie centrale vienne en butée contre un bord de l'échancrure et le fond de la gorge ne soit pas en contact avec le plateau de serrage de façon que les tôles magnétiques soient immobilisées selon une direction radiale et en rotation selon une direction axiale.

Avantageusement, la barre de retenue comprend en outre à son extrémité un chanfrein et la cale comporte un pan incliné coopérant avec le chanfrein.

De préférence, le pan incliné, le chanfrein, la gorge, les échancrures et le profil de la partie centrale sont configurés de sorte que la cale est enfoncée par l'extérieur du circuit magnétique entre le fraisage et un bord de l'ouverture.

Avantageusement, le pan incliné, le chanfrein, la gorge, les échancrures et le profil de la partie centrale sont configurés de sorte que la cale est enfoncée par l'intérieur du circuit magnétique entre le fraisage et un bord de l'ouverture.

Selon une autre caractéristique, le circuit magnétique comporte en outre des vis, la barre de retenue comprenant à au moins une de ses extrémités une gorge coopérant avec une ouverture du plateau de serrage pour maintenir les tôles magnétiques compactées selon la direction axiale. Le plateau comprend au moins une zone de fixation comprenant des taraudages coopérant avec les vis de sorte que lorsque les vis sont vissées dans les taraudages, la gorge vient s'emboîter sur un bord de l'ouverture opposé à la zone.

Avantageusement, au moins une partie centrale de la barre de retenue a un profil rectangulaire, cylindrique, carré ou trapézoïdal.

Selon un autre aspect, il est proposé un rotor et/ou un stator pour machine électrique tournante incorporant un circuit magnétique tel que défini précédemment.

Selon encore un autre aspect, il est proposé une machine électrique incorporant un stator et/ou un rotor tel que défini précédemment.

Il est proposé selon encore un autre aspect, un procédé de réalisation d'un circuit magnétique pour élément de machine électrique tournante comprenant une pluralité d'empilements de tôles magnétiques, des barres de retenue, deux plateaux de serrage, au moins un plateau de serrage comprenant autant d'ouvertures que de barres, au moins une extrémité de chaque barre de retenue étant configurée pour s'emboîter dans l'ouverture.

Le procédé comprend une étape de compactage axial dans laquelle on compacte les tôles magnétiques, et une étape de montage dans laquelle on emboîte au moins une extrémité des barres de retenue dans une ouverture.

Selon un mode de mise en œuvre du procédé, chaque tôle magnétique compactée comporte au moins une échancrure et chaque barre de retenue comprend à chacune de ses extrémités une gorge et un chanfrein et entre ses deux extrémités une partie centrale, et des cales. Pendant l'étape de montage, on dispose en outre la partie centrale de sorte qu'elle soit partiellement dans l'échancrure et un coté de chacune des deux gorges soit en contact avec un des deux plateaux. Le procédé comportant une étape durant laquelle on enfonce les cales selon une direction axiale jusqu'à ce que la partie centrale de la barre soit immobilisée contre un bord de l'échancrure.

Selon un autre mode de mise en œuvre du procédé, chaque tôle magnétique compactée comportant au moins une échancrure et chaque barre de retenue comprenant à chacune de ses extrémités une gorge et entre ses deux extrémités une partie centrale, et des cales, pendant l'étape de montage, on dispose en outre la partie centrale de sorte qu'elle soit partiellement dans l'échancrure et un coté de chacune des deux gorges soit en contact avec un des deux plateaux, le procédé comportant une étape durant laquelle on enfonce les cales jusqu'à ce que la partie centrale de la barre soit immobilisée contre un bord de l'échancrure.

Avantageusement, on répète l'étape de montage et de verrouillage jusqu'à ce que toutes les barres soient reliées aux plateaux de serrage.

Selon encore un autre aspect, il est proposé un procédé de réalisation d'un rotor et/ou un stator pour machine électrique tournante comprenant des étapes de procédés définies précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent un stator d'une machine tournante électrique selon l'état de la technique ;
- les figures 3 et 4 illustrent un premier mode de réalisation d'un stator d'une machine électrique tournante comprenant un circuit magnétique dont les tôles magnétiques sont maintenues compactées ;
- la figure 5 décrit un procédé d'obtention d'un circuit magnétique dont les tôles magnétiques sont maintenues compactées ;
- la figure 6 illustre un deuxième mode de réalisation d'un stator d'une machine électrique tournante comprenant un circuit magnétique dont les tôles magnétiques sont maintenues compactées ;
- la figure 7 illustre un troisième mode de réalisation d'un stator d'une machine électrique tournante comprenant un circuit magnétique dont les tôles magnétiques sont maintenues compactées ;
- les figures 8 et 9 illustrent un premier mode de réalisation d'un circuit magnétique dont les tôles sont maintenues compactées et immobilisées incorporé dans un stator ;
- la figure 10 décrit un procédé d'obtention d'un circuit magnétique dont les tôles sont maintenues compactées et immobilisées incorporé dans un stator ;
- la figure 11 illustre un deuxième mode de réalisation d'un circuit magnétique dont les tôles sont maintenues compactées et immobilisées incorporé dans un stator ;
- la figure 12 illustre un troisième mode de réalisation d'un circuit magnétique dont les tôles sont maintenues compactées et immobilisées incorporé dans un stator ;
- la figure 13 illustre un quatrième mode de réalisation d'un circuit magnétique dont les tôles sont maintenues compactées et immobilisées incorporé dans un stator ;
- les figures 14, 15 et 16 illustrent un cinquième mode de réalisation d'un circuit magnétique dont les tôles sont maintenues compactées et immobilisées incorporé dans un rotor ; et
- la figure 17 décrit un procédé d'obtention d'un circuit magnétique selon le cinquième mode de réalisation d'un circuit magnétique dont les tôles sont maintenues compactées et immobilisées incorporé dans un rotor.

La présente description concerne, de manière nullement limitative, un mode de réalisation d'une machine électrique tournante comprenant un circuit magnétique comprenant des empilements de tôles magnétiques statoriques ou rotoriques enserrées entre deux plateaux de serrage reliés par des barres de retenue incluses dans le stator et/ou le rotor de la machine électrique tournante. Bien entendu, on ne sort pas du cadre de l'invention lorsque le rotor est réalisé à partir d'un tel circuit magnétique ou lorsque la machine électrique tournante est équipée d'un stator ou d'un rotor, d'un rotor et d'un stator réalisés à partir d'un tel circuit magnétique.

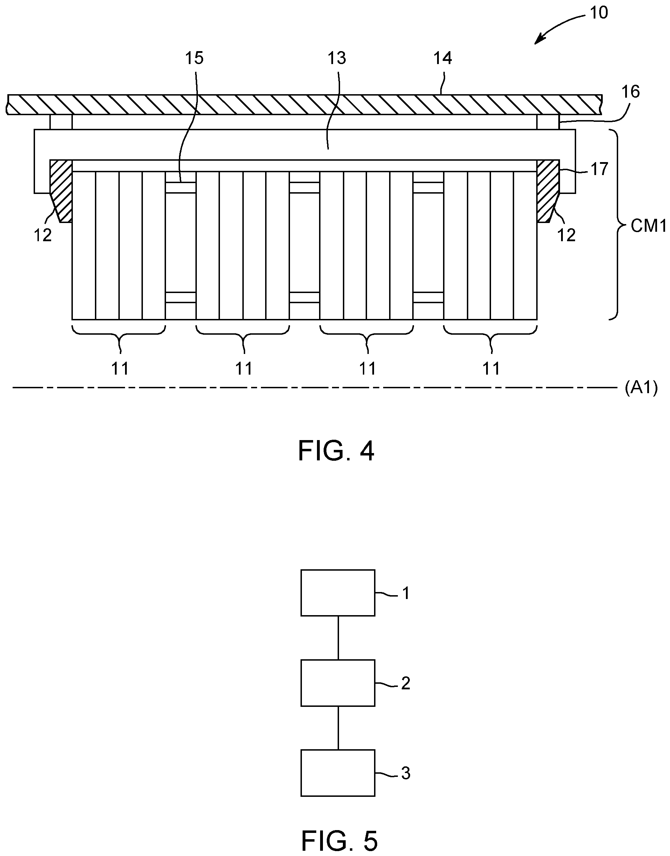

On se réfère aux figures 3 et 4 qui illustrent une portion d'un premier mode de réalisation d'un stator 10 et une demi-coupe du stator 10 de forme cylindrique d'une machine électrique tournante. Le stator 10 est destiné à recevoir un rotor dans son espace central comprenant un axe de révolution (A1).

Le stator 10 comprend un circuit magnétique CM1 comprenant des paquets de tôles magnétiques 11 compactés entre deux plateaux de serrage 12 disposés de part et d'autre du stator et reliés par des barres de retenue 13 réparties uniformément comme représentées ici sur une périphérie extérieure des tôles magnétiques selon la direction de l'axe (A1), et une carcasse 14 englobant le circuit magnétique.

Selon un autre mode de réalisation, les barres de retenue 13 peuvent être réparties de manière quelconque sur une périphérie extérieure des tôles magnétiques selon la direction de l'axe (A1).

Les barres de retenue 13 maintiennent les tôles compactées et sont au nombre minimum de deux. Pour des raisons de clarté, seule une barre 13 est représentée.

Le circuit magnétique CM1 de forme cylindrique est intégré dans la carcasse 14 de forme cylindrique comme représenté ici et relié à la carcasse de manière démontable par exemple par vissage.

La carcasse 14 peut être de forme quelconque, notamment carrée.

Le circuit magnétique CM1 comprend en outre des bobinages non représentés maintenus par des encoches dans les paquets de tôles.

Deux paquets de tôles magnétiques 11 adjacents peuvent être séparés par des distanceurs 15 de sorte à créer un canal de ventilation comme représenté ici.

Chaque plateau serrage 12 comprend autant d'ouvertures 16 que de nombre de barres 13 réparties uniformément ou pas en périphérie du plateau de serrage 12 selon la direction axiale (A1).

Au moins l'une des extrémités de la barre 13 est configurée pour s'emboîter dans une direction radiale sur un rebord de l'ouverture 16.

L'extrémité des barres de retenue et les ouvertures 16 dans les plateaux de serrage 12 sont incorporées dans des moyens de maintien configurés pour maintenir compacter les tôles magnétiques et immobiliser les tôles selon une direction axiale (A1).

Bien entendu, les moyens de maintien sont transposables par l'homme du métier dans le cas d'un rotor de machine électrique tournante.

L'extrémité libre de la barre 13 peut par exemple être soudée sur le plateau de serrage ou fixée par bridage, clavetage ou vissage au plateau de serrage.

La barre 13 peut comprendre de manière non limitative une gorge 17 qui s'étend sur toute la longueur de la barre comme représentée ici et configurée pour s'emboîter sur un rebord de l'ouverture 16, une gorge s'étendant sur au moins l'une de ses extrémités et configurée pour s'emboîter sur un rebord de l'ouverture 16, ou une pièce rapportée et vissée ou soudée à au moins une extrémité de la barre 13 de sorte que la barre et la pièce rapportée forment un crochet configuré pour s'emboîter sur un rebord de l'ouverture 16.

La barre 13 peut être de section rectangulaire, cylindrique, carrée ou trapézoïdale.

La barre 13 est par exemple usinée, moulée. Elle est réalisée par exemple en acier, aluminium, en cuivre ou en fonte.

Avantageusement le circuit magnétique CM1 du stator 10 est démontable de la carcasse 14 sans décompactage des tôles magnétiques 11. Il suffit de désolidariser le circuit magnétique CM1 et de retirer le circuit CM1 de la carcasse 14.

La figure 5 illustre un procédé d'obtention du stator 10.

Dans une première étape de compactage axial 1, les paquets de tôles magnétiques 11 séparés par des distanceurs 15 ou non séparés, et enserrés entre les deux plateaux de serrage 12 comprenant les ouvertures 16 sont compactés par exemple par une presse. Lorsque la pression de compactage axiale requise est atteinte, dans une étape de montage 2, au moins une première extrémité de chaque barre 13 est emboîtée sur un rebord d'une ouverture 16 d'un premier plateau de serrage de manière à ce qu'un des côtés de la gorge 17 soit en contact avec un des plateaux 12 et la seconde extrémité de la barre est reliée au deuxième plateau de serrage

L'étape 2 est répétée jusqu'à ce que toutes les barres 13 soient montées dans le circuit magnétique CM1.

Puis dans une étape de montage 3, le circuit magnétique obtenu est extrait de la presse puis est intégré et solidarisé à la carcasse 14.

Les tôles magnétiques sont maintenues compactées sans soudure. Par conséquent, aucune soudure n'est nécessaire ce qui réduit la durée des opérations de montage. Le circuit magnétique CM1 peut être prémonté ainsi les opérations de manutention sont simplifiées.

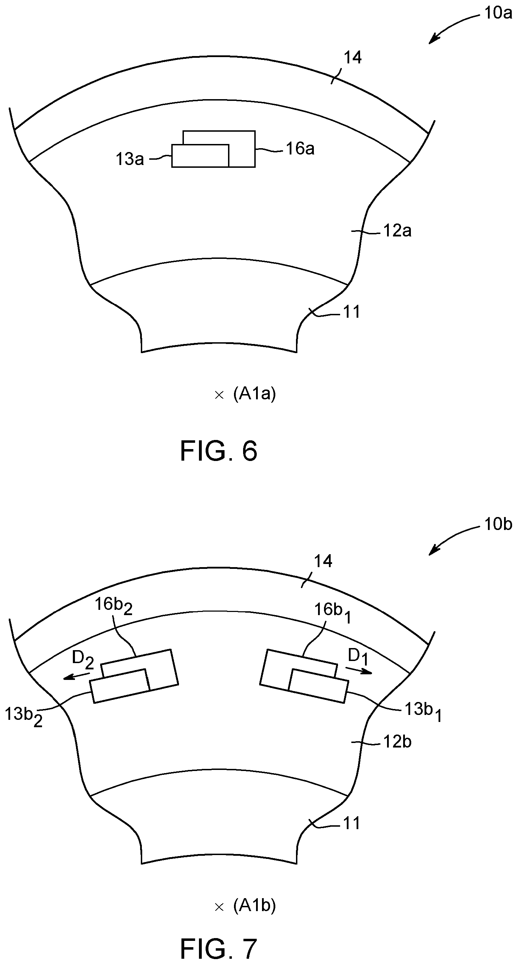

On se réfère à la figure 6 qui illustre une portion d'un deuxième mode de réalisation d'un stator 10a de forme cylindrique d'une machine électrique tournante. Les références identiques désignent les mêmes éléments tels que décrits précédemment.

Le stator 10a comprend un circuit magnétique comprenant les paquets de tôles magnétiques 11 compactés entre deux plateaux de serrage 12a disposés de part et d'autre du stator et reliés par des barres de retenue 13a réparties sur une périphérie extérieure des tôles magnétiques selon la direction de l'axe (Ala), et la carcasse 14 englobant le circuit magnétique.

Dans ce mode de réalisation, la barre de retenue 13a diffère de la barre 13 décrite précédemment en ce qu'elle s'emboîte selon une direction perpendiculaire à la direction radiale sur un rebord d'une ouverture 16a incorporée dans le plateau de serrage 12a.

On se réfère à la figure 7 qui illustre une portion d'un troisième mode de réalisation d'un stator 10b de forme cylindrique d'une machine électrique tournante. Les références identiques désignent les mêmes éléments tels que décrits précédemment.

Le stator 10b comprend un circuit magnétique comprenant les paquets de tôles magnétiques 11 compactés entre deux plateaux de serrage 12b disposés de part et d'autre du stator et reliés par une première barre de retenue 13b1 et une deuxième barre de retenue 13b2 réparties sur une périphérie extérieure des tôles magnétiques selon la direction de l'axe (Alb), et la carcasse 14 englobant le circuit magnétique.

Dans ce mode de réalisation, les barres de retenue 13b1 et 13b2 diffèrent de la barre 13 décrite précédemment en ce qu'elles s'emboîtent selon une direction perpendiculaire à la direction radiale sur respectivement un rebord d'une ouverture 16b1 et 16b2 incorporées dans le plateau de serrage 12b.

Les barres 13b1 et 13b2 s'emboîtent dans les ouvertures 16b1 et 16b2 de sorte que la barre 13b1 s'emboîte selon une direction D1 perpendiculaire à la direction radiale et la barre 13b2 s'emboîte dans une direction D2 perpendiculaire à la direction radiale et opposée à la direction D1 d'emboîtement de la première barre 13b1.

Bien entendu, dans le cas d'un circuit magnétique comportant plusieurs barres de retenue, deux barres de retenue successives s'emboîtent selon des directions d'emboîtement opposées.

En variante, un premier lot comprenant plusieurs barres telles que référencées 13b1 successivement emboîtées est suivi d'un deuxième lot comprenant plusieurs barres telles que référencées 13b2, les premier et deuxième lots se succédant.

Selon une autre variante, une première moitié des barres successives du circuit magnétique sont telles que référencées 13b1 et une deuxième moitié des barres successives du circuit magnétique sont telles que référencées 13b2.

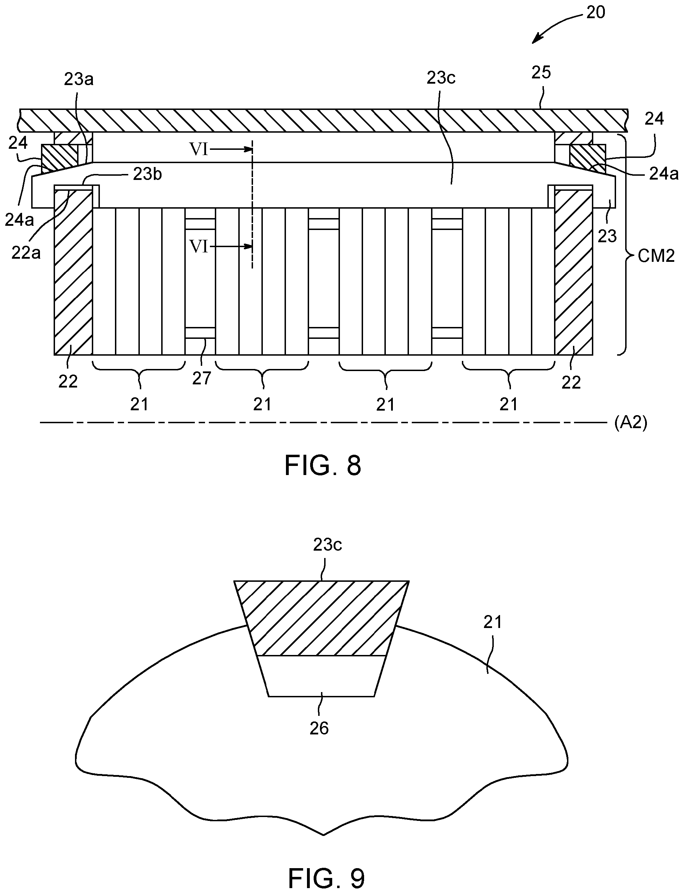

On se réfère aux figures 8 et 9 qui illustrent une demi-coupe d'un premier mode de réalisation d'un circuit magnétique dont les tôles sont maintenues compactées et immobilisées incorporé dans un stator 20 de forme cylindrique d'une machine électrique tournante et la coupe VI-VI représentée sur la figure 8. Le stator 20 est destiné à recevoir un rotor dans son espace central comprenant un axe de révolution (A2).

Les tôles magnétiques sont maintenues compactées et immobilisées dans une direction radiale et en rotation selon un premier mode de réalisation du circuit magnétique.

Le stator 20 comprend un circuit magnétique CM2 comprenant des paquets de tôles magnétiques 21 compactés entre deux plateaux de serrage 22 disposés de part et d'autre du stator et reliés par des barres de retenue 23 réparties uniformément comme représentées ici sur une périphérie extérieure des tôles magnétiques et maintenues par des cales 24 selon la direction de l'axe (A2), et une carcasse 25 englobant le circuit magnétique.

Selon un autre mode de réalisation, les barres de retenue 23 peuvent être réparties de manière quelconque sur une périphérie extérieure des tôles magnétiques selon la direction de l'axe (A2).

Pour des raisons de clarté, seule une barre 23 est représentée.

Le circuit magnétique CM2 de forme cylindrique est intégré dans la carcasse 25 et relié à la carcasse de manière démontable par exemple par vissage.

Le circuit magnétique CM2 comprend en outre des bobinages non représentés maintenus par des encoches formées par les paquets de tôle.

Deux paquets de tôles magnétiques 21 adjacents peuvent être séparés par des distanceurs 27 de sorte à créer un canal de ventilation comme représenté ici. Chaque tôle magnétique comprend une échancrure 26.

La barre de retenue 23 peut comprendre à chacune de ses deux extrémités un chanfrein 23a et une gorge 23b comme représenté ici.

La cale 24 comporte une face inclinée 24a coopérant avec le chanfrein 23a.

Selon d'autres modes de réalisation, la barre de retenue 23 peut comprendre à l'une de ses deux extrémités un chanfrein 23a et une gorge 23b et à l'autre extrémité de la barre 23 peut par exemple être soudée sur un plateau de serrage 22 ou fixée par bridage, clavetage ou vissage au plateau de serrage 22.

La partie centrale 23c de la barre 23 peut être de section rectangulaire, cylindrique, carrée ou trapézoïdale.

La forme de l'échancrure 26 est configurée de sorte que lorsque la partie centrale 23c est enfoncée dans l'échancrure, la tôle magnétique est immobilisée dans une direction radiale et en rotation selon la direction axiale (A2).

Chaque plateau de serrage 22 comprend autant d'ouvertures 22a que de barres 23 réparties uniformément ou pas sur une périphérie du plateau de serrage 22 selon la direction axiale (A2).

L'ouverture 22a est configurée de sorte que la barre 23 puisse passer au travers de l'ouverture dans le sens de sa longueur.

La cale 24, la face inclinée 24a, le chanfrein 23a, la gorge 23b, les échancrures 26 et le profil de la partie centrale 23c sont configurés de sorte que lorsque la cale 24 est enfoncée par l'extérieur du circuit magnétique CM2 entre le chanfrein 23a et un bord de l'ouverture 22a, la partie 23c vienne en butée contre un bord de l'échancrure 26 et le fond de la gorge 23b ne soit pas en contact avec le plateau 22.

Par exemple, la partie 23c peut être de section trapézoïdale comme représentée ici. Dans ce cas, l'échancrure 26 est de section trapézoïdale. Les cales 24 sont enfoncées jusqu'à ce que les bords de la partie 23c soient en butée avec les bords de l'échancrure 26.

Les tôles magnétiques sont maintenues dans une direction radiale et en rotation selon la direction axiale (A2) par la partie centrale 23c coopérant avec l'échancrure 26, et dans une direction axiale par la barre de retenue 23 sans que le circuit CM2 soit hyperstatique.

La barre 23 est par exemple usinée, moulée. Elle est réalisée par exemple en acier, aluminium, en cuivre ou en fonte.

Les barres 23, les cales 24, les échancrures 26 et les ouvertures 22a sont incorporées dans une première configuration de moyens de maintien et d'immobilisation configurés pour maintenir les tôles magnétiques compactées et les immobiliser dans des directions axiales et radiales, et empêcher la rotation des tôles selon la direction axiale (A2).

Avantageusement le circuit magnétique CM2 du stator 20 est démontable de la carcasse 25 sans décompactage des tôles magnétiques 21. Il suffit de désolidariser le circuit magnétique CM2 et de retirer le circuit CM2 de la carcasse 25.

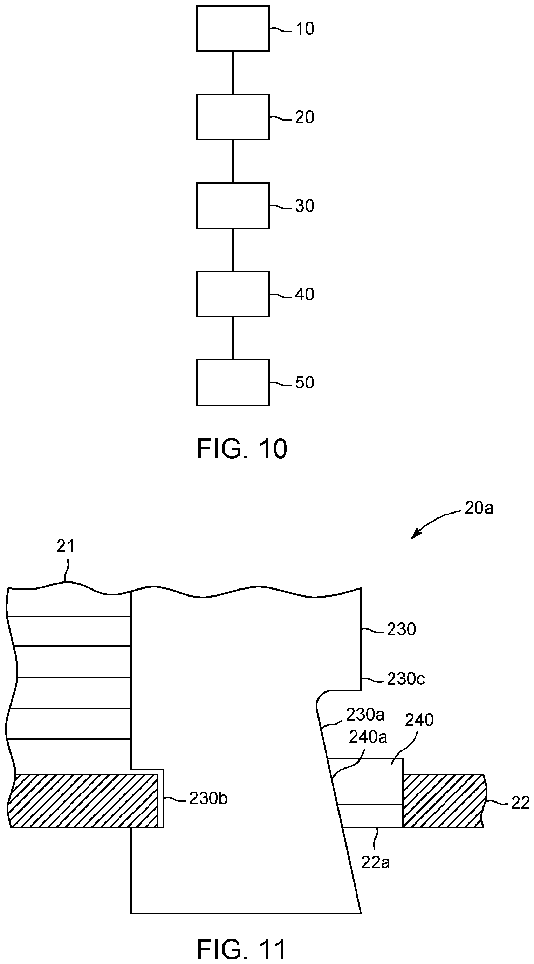

La figure 10 illustre un procédé d'obtention du stator 20.

Dans une première étape de compactage 10, les paquets de tôles magnétiques 21 séparés par des distanceurs 27 ou non séparés, et enserrés entre les deux plateaux de serrage 22 comprenant les ouvertures 22a sont compactés par exemple par une presse.

Lorsque la pression de compactage requise est atteinte, dans une étape de montage 20, la barre 23 est mise en place de sorte que la partie centrale 23c soit partiellement dans l'échancrure 26 et un coté de chacune des deux gorges 23b soit en contact avec un des deux plateaux 22.

Dans une étape de verrouillage 30, les cales 24 sont enfoncées jusqu'à ce que la partie 23c soit immobilisée dans l'échancrure 26.

Les étapes 20 et 30 sont répétées jusqu'à ce que toutes les barres 23 soient montées dans le circuit CM2.

Puis dans une étape 40, le circuit magnétique CM2 obtenu est extrait de la presse. Un coté de la gorge 23b en appui sur le plateau de serrage 22 maintient le compactage axial des tôles magnétiques.

Dans une étape de montage 50 statorique, le circuit magnétique CM2 est intégré et solidarisé à la carcasse 25 de manière démontable.

Les tôles magnétiques sont maintenues compactées et immobilisées dans une direction radiale et une rotation selon l'axe (A2) est empêchée. Aucune soudure n'est nécessaire ce qui réduit la durée des opérations de montage. Le circuit magnétique CM2 peut être prémonté ainsi les opérations de planification, de fabrication et de manutention sont simplifiées.

On se réfère à la figure 11 qui illustre une portion d'un deuxième mode de réalisation d'un circuit magnétique dont les tôles sont maintenues compactées et immobilisées dans un stator 20a comprenant des barres de retenue 230 comprenant une partie centrale 230c, des plateaux de serrage 22 et des cales 240, les références identiques désignent les mêmes éléments tels que décrits précédemment.

Pour des raisons de clarté, la portion illustre l'emboîtement de la barre 230 sur un coté de l'ouverture 22a.

La barre de retenue 230 comprend un chanfrein 230a.

La cale 240 comprend un pan incliné 240a coopérant avec la face 230a de manière que lorsque la cale 240 est enfoncée par l'intérieur du circuit magnétique entre le plateau 22 et le chanfrein 230a, la gorge 230b est emboîtée sur une face de l'ouverture 22a.

Le procédé de réalisation est identique à celui décrit à la figure 10.

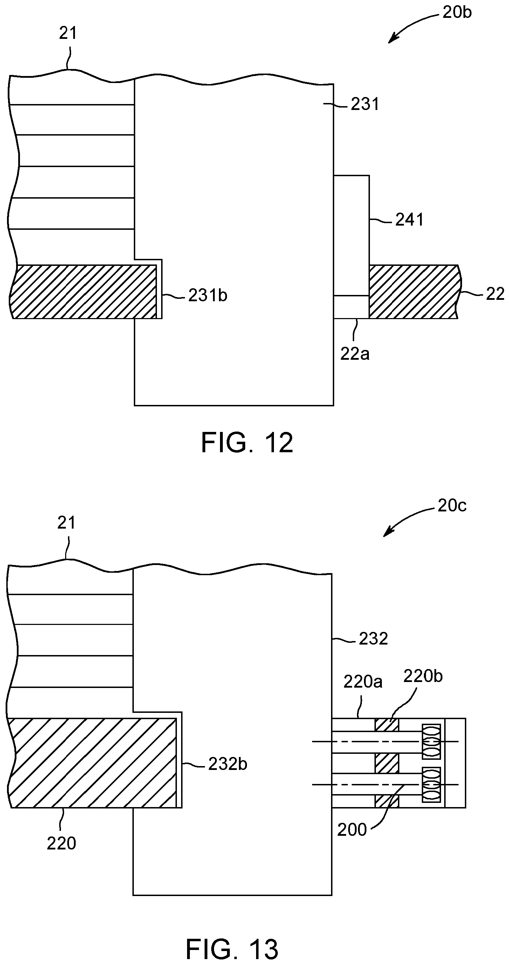

On se réfère à la figure 12 qui illustre une portion d'un troisième mode de réalisation d'un circuit magnétique dont les tôles sont maintenues compactées et immobilisées incorporé dans un stator 20b comprenant des barres de retenue 231, les plateaux de serrage 22 et des cales 241, les références identiques désignent les mêmes éléments.

Pour des raisons de clarté, la portion illustre l'emboîtement de la barre 231 sur un coté de l'ouverture 22a.

La barre de retenue 231 est de section rectangulaire ou carrée et comprend une gorge 231b.

La cale 241 est de section rectangulaire ou carrée et coopère avec la barre 231 et l'ouverture 22a de manière que lorsque la cale 241 est enfoncée entre le plateau 22 et la face de la barre opposée à la gorge 231b, la gorge 231b est emboîtée sur une face de l'ouverture 22a.

Le procédé de réalisation est identique à celui décrit à la figure 10.

On se réfère à la figure 13 qui illustre une portion d'un quatrième mode de réalisation d'un circuit magnétique dont les tôles sont maintenues compactées et immobilisées dans un stator 20c comprenant des barres de retenue 232, des plateaux de serrage 220 et des vis 200, les références identiques désignent les mêmes éléments.

Pour des raisons de clarté, la portion illustre l'emboîtement de la barre 232 sur un coté d'une l'ouverture 220a incorporée dans le plateau 220.

La barre de retenue 232 est de section rectangulaire ou carrée et comprend une gorge 232b.

Le plateau 220 comprend une zone de fixation 220b comprenant des taraudages coopérant avec les vis 200 de sorte que lorsque les vis 200 sont vissées dans les taraudages, la gorge 232b vient s'emboîter sur un bord opposé à la zone 220b de l'ouverture 220a.

Le procédé de réalisation est différent de celui décrit à la figure 10 en ce qu'il n'y a pas de cale d'appui, la fonction de la cale étant réalisée par les vis 200 qui vissées appuient sur la barre de retenue.

Dans tous ces modes de réalisation illustrés aux figures 8 à 13, l'homme du métier comprend que les cales 24, 240, 241 ou les vis 200 sécurisent l'emboîtement de la gorge 23b, 230b, 231b, 232b de la barre de retenue dans l'ouverture du plateau de serrage, par appui sur la barre l'empêchant de se désengager/désemboîter de l'ouverture du plateau de serrage.

De même, tous ces modes de réalisation illustrés aux figures 8 à 13 peuvent être associés au maintien radial et en rotation des tôles magnétiques par appui de la partie centrale 23c de la barre en butée contre un bord de l'échancrure 26 sans que le fond de la gorge 23b, 230b, 231b, 232b de la barre soit en contact avec le plateau 22, 220.

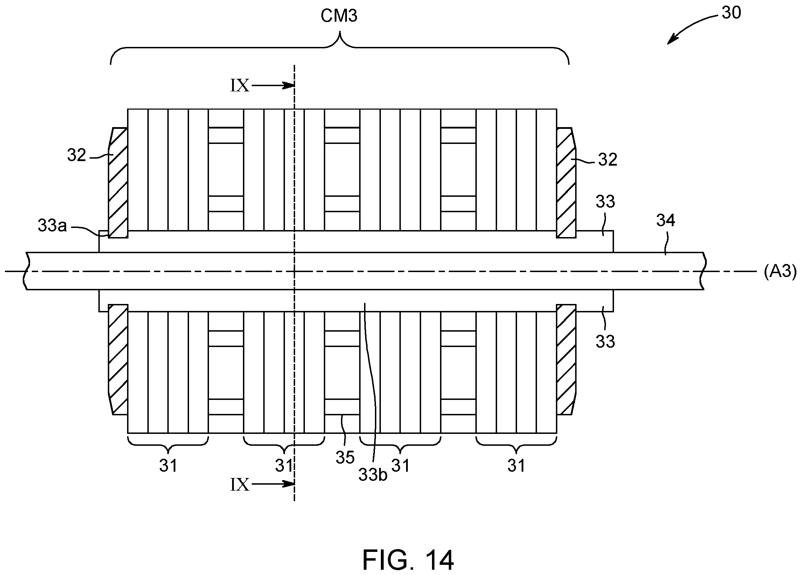

On se réfère aux figures 14, 15 et 16 qui illustrent respectivement une demi-coupe d'un cinquième mode de réalisation d'un rotor 30 de forme cylindrique d'une machine électrique tournante, une coupe selon la section IX-IX représentée sur la figure 14 et une extrémité du rotor 30. Le rotor 30 est destiné à être inséré dans un stator, par exemple dans un des stators décrits précédemment. Il comprend un axe de révolution (A3).

Les tôles magnétiques sont maintenues compactées et immobilisées dans une direction radiale et en rotation selon un second mode de réalisation du circuit magnétique.

Le rotor 30 comprend un circuit magnétique CM3 comprenant des paquets de tôles magnétiques 31 évidés en leur centre et compactés entre deux plateaux de serrage 32 disposés de part et d'autre du rotor reliés par des barres de retenue 33 réparties uniformément ou pas sur une périphérie interne des tôles magnétiques selon la direction de l'axe (A3), et un arbre 34.

Les paquets de tôle sont maintenus ici par exemple par quatre barres de retenue 33.

L'arbre 34 est inséré dans l'évidement central des tôles 31 et maintenu dans l'évidement par exemple par frettage, par clavetage ou tout autre procédé connu de l'homme du métier.

Le circuit magnétique CM3 peut comprendre en outre des bobinages non représentés maintenus par des encoches formées par les paquets de tôle ou par exemple des barres en cuivre reliées entre elles et disposées régulièrement sur une périphérie des tôles magnétiques de sorte à former une cage d'écureuil.

Deux paquets de tôles magnétiques 31 adjacents peuvent être séparés par des distanceurs 35 de sorte à créer un canal de ventilation comme représenté ici. Chaque tôle magnétique comprend une échancrure 36 sur son périmètre intérieur comme représenté à la figure 9.

Les barres 33 comprennent comme représenté ici à chacune de leurs deux extrémités une gorge 33a configurée pour recevoir le plateau de serrage 32.

Selon d'autres modes de réalisation, la barre de retenue 33 peut comprendre à l'une de ses deux extrémités une gorge 33a configurée pour recevoir le plateau de serrage 32 et l'autre extrémité de la barre 33 peut par exemple être soudée sur un plateau de serrage 32 ou fixée par bridage, clavetage ou vissage au plateau de serrage 32.

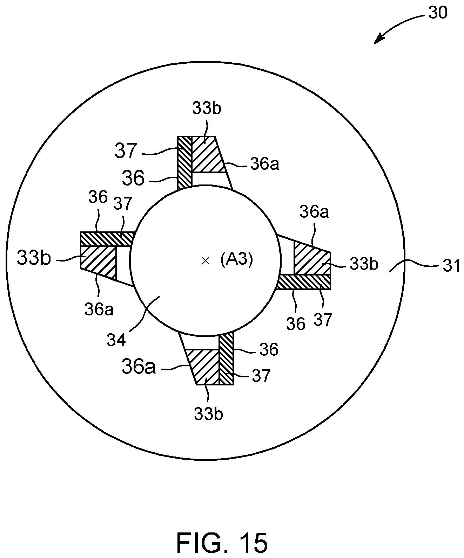

La partie centrale 33b des barres 33 peut être de section rectangulaire, cylindrique, carrée ou trapézoïdale comme représentée à la figure 15.

Les plateaux de serrage 32 comportent sur une périphérie intérieure des ouvertures 32a.

Les ouvertures 32a, les gorges 33a et la partie centrale 33b forment une deuxième configuration de moyens de maintien et d'immobilisation configurés pour maintenir les tôles magnétiques compactées et les immobiliser dans des directions axiales et radiales, et empêcher la rotation des tôles selon une direction axiale (A3).

La forme de l'échancrure 36 est configurée de sorte que lorsque la partie centrale 33b est enfoncée dans l'échancrure, la tôle magnétique est immobilisée dans une direction radiale et en rotation selon la direction axiale (A3).

Ici, l'échancrure 36 a une forme trapézoïdale de sorte que lorsque la barre 33 est mise en place, celle-ci vient se loger dans l'échancrure 36 de même forme trapézoïdale et de dimensions telles que la barre 33 puisse être introduite dans l'échancrure.

Les échancrures 36 peuvent être toutes orientées dans un même sens, c'est-à-dire que les parties inclinées 36a sont orientées dans le même sens par exemple suivant le sens horaire de rotation selon l'axe (A3) ou disposées alternativement dans le sens horaire puis antihoraire comme représenté ici.

Bien entendu, les première et deuxième configurations des moyens de maintien et d'immobilisation sont transposables dans le cas d'un stator ou d'un rotor de machine électrique tournante.

Dans le cas d'un stator, les barres 33b et les échancrures 36 sont disposées sur une périphérie extérieure des tôles magnétiques 31.

Une cale 37 est insérée entre l'échancrure 36 et la barre 33 de sorte à bloquer la barre de retenue 33 dans l'échancrure 36 et vient en appui sur la partie inclinée 36a.

La cale 37 peut être rectangulaire, c'est-à-dire que les faces sont parallèles, comme représenté ici ou peut comprendre une face inclinée coopérant avec un fraisage incorporé dans la barre de retenue 33.

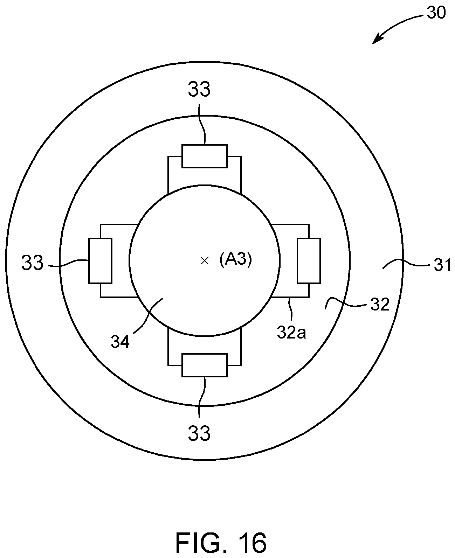

Comme illustré à la figure 16, chaque plateau de serrage 32 comprend autant d'ouvertures 32a que de barres 33 réparties uniformément ou pas en périphérie intérieure du plateau de serrage 32 selon la direction axiale (A3).

Dans le cas d'un stator, les barres 33 sont réparties en périphérie extérieure du plateau de serrage 32 selon la direction axiale (A3).

L'ouverture 32a est configurée de sorte que la barre 33 puisse passer au travers de l'ouverture dans le sens de sa longueur.

L'arbre 34 peut participer au maintien des tôles 31 en bloquant la barre de retenue 33 dans la direction radiale si le jeu radial entre la barre 33 et l'arbre 34 est inférieur à la profondeur radiale de la gorge 33a.

Le plateau de serrage 32 est toujours en appui sur une des faces de la gorge 33a, même si la barre 33 se déplace radialement, car la barre est stoppée radialement par l'arbre 34.

Par conséquent, les tôles 31 sont maintenues compactées axialement.

Dans le cas d'un stator, la carcasse du stator peut participer au maintien des tôles magnétiques en bloquant la barre de retenue 33 dans la direction radiale si le jeu radial entre la barre 33 et la carcasse 14 est inférieur à la profondeur radiale de la gorge 33a.

Les tôles magnétiques sont maintenues dans une direction radiale et en rotation selon l'axe (A3) par la partie centrale 33b et la cale 37 coopérant avec l'échancrure 36, et dans une direction axiale par la gorge 33a de la barre de retenue 33.

La barre 33 est par exemple usinée, moulée. Elle est réalisée par exemple en acier, aluminium, en cuivre ou en fonte.

Avantageusement le circuit magnétique CM3 du rotor 30 est démontable de l'arbre 34 sans décompactage des tôles magnétiques 31. Il suffit de désolidariser le circuit magnétique CM3 et de retirer le circuit CM3 de l'arbre 34.

Dans le cas d'un stator, il suffit de désolidariser le circuit magnétique CM3 de la carcasse du stator et de retirer le circuit CM3 de la carcasse 25.

L'immobilisation des tôles magnétiques selon une direction radiale et en rotation selon la direction axiale (A3) peut se faire dans une direction différente du maintien de la compaction axiale des tôles magnétiques. Ici, l'immobilisation des tôles selon une direction radiale et en rotation selon la direction radiale (A3) se fait par contact entre la face inclinée 36a de l'échancrure incorporée dans les tôles 31 coopérant avec la partie centrale 33b de la barre dans une direction perpendiculaire à la direction radiale. Le maintien du compactage dans une direction axiale des tôles 31 est réalisé par la gorge 33a en appui sur un rebord de l'ouverture 32a incorporée dans le plateau de serrage 32 selon la direction radiale.

L'immobilisation des tôles magnétiques selon une direction radiale et en rotation selon une direction axiale peut être réalisée dans une direction différente de la direction de maintien du compactage des tôles magnétiques comme représenté ici, les deux directions étant perpendiculaires ou selon une même direction.

Les deux fonctions, d'une part de compactage et, d'autre part, d'immobilisation radiale et en rotation selon une direction axiale sont indépendantes.

Une barre peut réaliser l'une ou l'autre des deux fonctions ou les deux fonctions à la fois.

Ainsi, dans divers modes de réalisation, une barre de retenue peut comporter une partie centrale d'immobilisation des tôles magnétiques et des extrémités ayant des gorges servant à maintenir le compactage des tôles.

On ne sort toutefois pas du cadre de l'invention lorsqu'une barre de retenue conserve la partie centrale d'immobilisation mais utilise à ses extrémités des solutions conventionnelles de type clavetage, bridage, soudage.

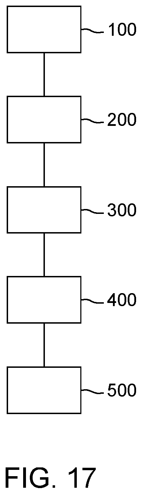

La figure 17 illustre un procédé d'obtention du rotor 30.

Dans une étape de compactage 100, les paquets de tôles magnétiques 31 séparés par des distanceurs 35 ou non séparés, et enserrés entre les deux plateaux de serrage 32 comprenant les ouvertures 32a sont compactés par exemple par une presse.

Lorsque la pression de compactage requise est atteinte, dans une étape de montage 200, une première barre de retenue 33 est mise en place de sorte que la partie inclinée du profil trapézoïdal de la barre 33 soit en contact avec la partie inclinée 36a de l'échancrure 36 et un côté de chacune des gorges 33a soit en contact avec un des plateaux 32.

Puis dans une étape de verrouillage 300, les cales 37 sont mises en place de sorte que la barre 33 soit immobilisée dans l'échancrure 36.

Les opérations 200 et 300 sont répétées jusqu'à ce que toutes les barres 33 soient montées dans le circuit CM3.

Puis dans une étape 400, le circuit magnétique CM3 obtenu est extrait de la presse. La gorge 33a en appui sur le plateau de serrage 32 maintient le compactage axial des tôles magnétiques.

Dans une étape de montage 500 rotorique, le circuit magnétique CM3 et l'arbre 34 sont solidarisés de manière démontable par exemple par un procédé de frettage ou de clavetage.

Les tôles magnétiques sont maintenues compactées et immobilisées dans une direction radiale et une rotation selon l'axe (A3) de rotation du moteur est empêchée. Aucune soudure n'est nécessaire ce qui réduit la durée des opérations de montage. Le circuit magnétique CM3 peut être prémonté ainsi les opérations de manutention, planification et fabrication sont simplifiées.

Comme les stators et rotor décrits ne nécessitent aucune opération de soudage, la surface de matière requise dans les plateaux de serrage pour l'élaboration d'un cordon de soudure peut être utilisée pour augmenter le volume de tôles magnétiques.

Par exemple, pour un même diamètre extérieur de la carcasse d'un stator d'une machine électrique tournante, le circuit magnétique comprend plus de tôles magnétiques par un diamètre extérieur plus important, par conséquent la puissance développée par la machine électrique tournante est augmentée.

Les circuits magnétiques obtenus peuvent être prémontés et sont facilement manipulables.

La maintenance ou la réparation d'une machine électrique tournante incorporant un circuit magnétique tel que décrit précédemment est facilitée.

Un circuit magnétique tel que décrit précédemment peut être incorporé et solidarisé respectivement à un arbre ou une carcasse avant ou après l'opération de bobinage selon la planification des opérations de fabrication d'une machine électrique tournante incorporant le stator et/ou le rotor comprenant le circuit magnétique.

De préférence, le circuit magnétique est intégré et solidarisé à l'arbre ou à la carcasse après l'opération de bobinage rendant la réalisation du circuit magnétique indépendante des opérations de réalisation de l'arbre ou de la carcasse.

De plus, les opérations de réglage de la précontrainte de compactage axial des tôles magnétiques sont facilitées dans le cas de réalisation de plusieurs exemplaires d'un même rotor ou stator.

En effet selon le nombre de paquets de tôles magnétiques et d'étage de distanceurs, la valeur de la précontrainte de compactage axial est fixée par la longueur de la partie centrale de la barre de retenue, c'est-à-dire la distance entre les faces d'appui des gorges destinées à être en contact avec les plateaux de serrage. Cette distance fixe la longueur comprimée, par conséquent la pression de compactage axial des tôles magnétiques. Il suffit d'ajuster cette longueur sur le premier exemplaire produit puis de reproduire la barre de retenue ainsi conçue pour les exemplaires ultérieurs.

La barre de retenue est réalisée notamment par usinage permettant de réaliser avec une précision améliorée par rapport aux solutions connues de l'art antérieur la distance entre les faces d'appui des gorges destinées à être en contact avec les plateaux de serrage. Par conséquent le parallélisme entre les plateaux de serrage est amélioré.

Le parallélisme entre les deux plateaux de serrage obtenu par usinage précis de la distance entre les faces d'appui des gorges avec des moyens d'usinage connus de l'état de la technique est amélioré par rapport à des barres soudées sur des plateaux de serrage.

De plus, l'amélioration de la réalisation du parallélisme entre les deux plateaux de serrage permet de répartir la pression de compactage axial sur toute la surface des plateaux de serrage de manière que la pression de compactage soit homogène dans l'ensemble du circuit magnétique.

Par conséquent, on réduit les risques de compactage insuffisant, notamment à l'extrémité des encoches de bobinage, pouvant entraîner des vibrations des tôles magnétiques susceptibles de détériorer l'isolation électrique des bobinages par abrasion, par vibration.

La barre de retenue peut contribuer soit à son extrémité à la fonction de maintien du compactage axial des tôles, soit à l'immobilisation des tôles selon une direction radiale et en rotation selon la direction radiale (A3) si elle inclut un profil trapézoïdal dans sa partie centrale, ou combiner les deux fonctions comme représentées aux figures 8 et 9 ou 14 à 16.

## Revendications

1. Circuit magnétique pour élément de machine électrique tournante comprenant une pluralité d'empilements de tôles magnétiques compactées (11, 21, 31) selon une direction axiale (A1, A2, A3) et enserrées entre deux plateaux de serrage (12, 12a, 12b, 22, 32, 220) reliés par des barres de retenue amovibles (13, 13a, 13b1, 13b2, 23, 33, 230, 231, 232), au moins un plateau de serrage comprenant autant d'ouvertures (16, 16a, 16b1, 16b2, 22a, 32a, 220a) que de barres de retenue amovibles, et des moyens de maintien configurés pour compactées les tôles magnétiques et immobiliser les tôles selon une direction axiale, les moyens de maintien comprenant au moins une extrémité de chaque barre de retenue et les ouvertures du au moins un plateau de serrage, la au moins une extrémité de chaque barre de retenue étant configurées pour coopérer de manière que l'extrémité de chaque barre de retenue s'emboîte sur un rebord de l'ouverture, **caractérisé en ce que** au moins une extrémité de la barre comporte une gorge (17, 23b, 33a, 231b, 230b, 232b) coopérant avec une ouverture du au moins un plateau de serrage pour maintenir les tôles magnétiques compactées selon la direction axiale (A1, A2, A3).

2. Circuit magnétique selon la revendication 1, dans lequel au moins une extrémité de la barre comprend une pièce rapportée et vissée ou soudée de sorte que la barre et la pièce rapportée forment un crochet coopérant avec une ouverture du au moins un plateau de serrage pour maintenir les tôles magnétiques compactées selon la direction axiale (A1, A2, A3).

3. Circuit magnétique selon l'une des revendications 1 et 2, dans lequel la barre (13, 23, 33) s'emboîte selon une direction radiale sur un rebord de l'ouverture (16, 22a, 32a).

4. Circuit magnétique selon l'une des revendications 1 et 2, dans lequel la barre (13a, 13b1, 13b2) s'emboîte selon une direction perpendiculaire à la direction radiale sur un rebord de l'ouverture (16a, 16b1, 16b2).

5. Circuit magnétique selon la revendication 4 comportant en outre une deuxième ouverture (16b2) dans le plateau de serrage (12b) et au moins une deuxième barre de retenue (13b2) identique à la barre de retenue (13b1) coopérant avec une ouverture du au moins un plateau de serrage pour maintenir les tôles magnétiques compactées selon la direction axiale (A1), les barres s'emboîtant selon des directions respectives perpendiculaires à la direction radiale et opposées l'une par rapport à l'autre.

6. Circuit magnétique selon l'une quelconque des revendications 1 à 5, dans lequel la barre de retenue (23, 33) comprend entre ses deux extrémités une partie centrale (23c, 33b) et chaque tôle magnétique comprend au moins une échancrure (26, 36) configurée pour accueillir la partie centrale (23c, 33b) de façon que les tôles magnétiques soient immobilisées dans la direction radiale et en rotation selon la direction axiale (A2, A3).

7. Circuit magnétique selon la revendication 6, dans lequel la barre de retenue (23, 230, 231) comprend à au moins une de ses extrémités une gorge (23b, 230b, 231b) coopérant avec une ouverture (22a) du plateau de serrage pour maintenir les tôles magnétiques compactées selon la direction axiale (A2), et comprenant au moins une cale (24, 240, 241) configurée de sorte que lorsque la cale est enfoncée selon la direction axiale (A2) entre la barre de retenue et un bord de l'ouverture, la partie centrale de la barre vienne en butée contre un bord de l'échancrure (26) et le fond de la gorge ne soit pas en contact avec le plateau de serrage de façon que les tôles magnétiques (21) soient immobilisées selon une direction radiale et en rotation selon la direction axiale (A2).

8. Circuit magnétique selon la revendication 7, dans lequel la barre de retenue (23, 230) comprend en outre à son extrémité un chanfrein (23a, 230a) et la cale (24, 240) comporte un pan incliné (24a, 240a) coopérant avec le chanfrein.

9. Circuit magnétique selon la revendication 8, dans lequel le pan incliné (24a), le chanfrein (23a), la gorge (23b), les échancrures (26) et le profil de la partie centrale (23c) sont configurés de sorte que la cale (24) est enfoncée par l'extérieur du circuit magnétique (CM2) entre le chanfrein (23a) et un bord de l'ouverture (22a).

10. Circuit magnétique selon la revendication 8, dans lequel le pan incliné (240a), le chanfrein (230a), la gorge (230b), les échancrures (26) et le profil de la partie centrale (230c) sont configurés de sorte que la cale (240) est enfoncée par l'intérieur du circuit magnétique entre le chanfrein (230a) et un bord de l'ouverture (22a).

11. Circuit magnétique selon la revendication 6, comportant en outre des vis (200), la barre de retenue (232) comprenant à au moins une de ses extrémités une gorge (232b) coopérant avec une ouverture (220a) du plateau de serrage pour maintenir les tôles magnétiques (21) compactées selon la direction axiale (A2), le plateau (220) comprenant au moins une zone de fixation (220b) comprenant des taraudages coopérant avec les vis de sorte que lorsque les vis sont vissées dans les taraudages, la gorge (232b) vient s'emboîter sur un bord de l'ouverture (220a) opposé à la zone (220b).

12. Circuit magnétique selon l'une quelconque des revendications 6 à 11, dans lequel au moins la partie centrale de la barre de retenue a un profil rectangulaire, cylindrique, carré ou trapézoïdal.

13. Rotor pour machine électrique tournante, le rotor comprenant un circuit magnétique selon l'une quelconque des revendications 1 à 12.

14. Stator pour machine électrique tournante, le stator comprenant un circuit magnétique selon l'une quelconque des revendications 1 à 12.

15. Machine électrique tournante comprenant un rotor et un stator, l'un au moins desdits rotor et stator comprenant un circuit magnétique selon l'une quelconque des revendications 1 à 12

16. Procédé de réalisation d'un circuit magnétique pour élément de machine électrique tournante comprenant une pluralité d'empilements de tôles magnétiques (11, 21, 31), des barres de retenue (13, 23, 33), deux plateaux de serrage (12, 22, 32), au moins un plateau de serrage comprenant autant d'ouvertures (16, 22a, 32a) que de barres, et des moyens de maintien configurés pour compactées les tôles magnétiques et immobiliser les tôles selon une direction axiale, les moyens de maintien comprenant au moins un extrémité de chaque barre de retenue et les ouvertures du au moins un plateau de serrage, la au moins une extrémité de chaque barre de retenue étant configurée pour s'emboîter dans l'ouverture, le procédé comprenant une étape de compactage axial dans laquelle on compacte les tôles magnétiques, et une étape de montage dans laquelle on emboîte au moins une extrémité des barres de retenue dans une ouverture, **caractérisé en ce que** au moins une extrémité de chaque barre comporte une gorge (23b, 33a) coopérant avec une ouverture du au moins un plateau de serrage pour maintenir les tôles magnétiques compactées selon la direction axiale (A1, A2, A3).

17. Procédé selon la revendication 16, dans lequel chaque tôle magnétique compactée comporte au moins une échancrure (26) et chaque barre de retenue comprend à chacune de ses extrémités la gorge (23b) et un chanfrein (23a) et entre ses deux extrémités une partie centrale (23c), et des cales (24), dans lequel pendant l'étape de montage on dispose en outre la partie centrale de sorte qu'elle soit partiellement dans l'échancrure et un coté de chacune des deux gorges soit en contact avec un des deux plateaux, et comportant une étape durant laquelle on enfonce les cales selon une direction axiale jusqu'à ce que la partie centrale de la barre soit immobilisée contre un bord de l'échancrure.

18. Procédé selon la revendication 16, dans lequel chaque tôle magnétique compactée comportant au moins une échancrure (36) et chaque barre de retenue (33) comprenant à chacune de ses extrémités la gorge (33a) et entre ses deux extrémités une partie centrale (33b), et des cales (37), dans lequel pendant l'étape de montage on dispose en outre la partie centrale de sorte qu'elle soit partiellement dans l'échancrure et un coté de chacune des deux gorges soit en contact avec un des deux plateaux, et comportant une étape durant laquelle on enfonce les cales jusqu'à ce que la partie centrale de la barre soit immobilisée contre un bord (36a) de l'échancrure.

19. Procédé selon l'une des revendications 16 à 18, dans lequel on répète l'étape de montage et de verrouillage jusqu'à ce que toutes les barres soient reliées aux plateaux de serrage.

20. Procédé de réalisation d'un stator de machine électrique tournante comprenant une carcasse et un circuit magnétique selon l'une quelconque des revendications 16 à 19, **caractérisé en ce qu'**il comprend une étape de montage statorique dans lequel on solidarise le circuit magnétique et la carcasse de manière démontable.

21. Procédé de réalisation d'un rotor de machine électrique tournante comprenant un arbre et un circuit magnétique selon l'une quelconque des revendications 16 à 19, **caractérisé en ce qu'**il comprend une étape de montage rotorique dans lequel on solidarise le circuit magnétique et l'arbre de manière démontable.

## Patentansprüche

1. Magnetschaltkreis für ein Element einer umlaufenden, elektrischen Maschine, umfassend eine Vielzahl von Stapeln magnetischer Bleche, die komprimiert (11, 21, 31) sind gemäß einer axialen Richtung (A1, A2, A3) und eingespannt zwischen zwei Spannplatten (12, 12a, 12b, 22, 32, 220), die durch abnehmbare Rückhaltestäbe (13, 13a, 13b1, 13b2, 23, 33, 230, 231, 232) verbunden sind, wobei mindestens eine Spannplatte so viele Öffnungen (16, 16a, 16b1, 16b2, 22a, 32a, 220a) wie abnehmbare Rückhaltestäbe umfasst, und Haltemittel, die ausgestaltet sind, die magnetischen Bleche zu komprimieren und die Bleche gemäß einer axialen Richtung zu blockieren, wobei die Haltemittel mindestens ein Ende von jedem Rückhaltestab und die Öffnungen der mindestens einen Spannplatte umfassen, wobei das mindestens eine Ende von jedem Rückhaltestab ausgestaltet ist, so zusammenzuwirken, dass sich das Ende von jedem Rückhaltestab auf einem Rand der Öffnung einfügt, **dadurch gekennzeichnet, dass** mindestens ein Ende des Stabs eine Ausnehmung (17, 23b, 33a, 231b, 230b, 232b) umfasst, die mit einer Öffnung der mindestens einen Spannplatte zusammenwirkt, um die magnetischen Bleche gemäß der axialen Richtung (A1, A2, A3) komprimiert zu halten.

2. Magnetschaltkreis nach Anspruch 1, wobei mindestens ein Ende des Stabs ein angestücktes und verschraubtes oder verschweißtes Teil umfasst, sodass der Stab und das angestückte Teil einen Haken bilden, der mit einer Öffnung der mindestens einen Spannplatte zusammenwirkt, um die magnetischen Bleche gemäß der axialen Richtung (A1, A2, A3) komprimiert zu halten.

3. Magnetschaltkreis nach einem der Ansprüche 1 und 2, wobei sich der Stab (13, 23, 33) gemäß einer radialen Richtung auf einem Rand der Öffnung (16, 22a, 32a) einfügt.

4. Magnetschaltkreis nach einem der Ansprüche 1 und 2, wobei sich der Stab (13a, 13b1, 13b2) gemäß einer Richtung senkrecht zu der radialen Richtung auf einem Rand der Öffnung (16a, 16b1, 16b2) einfügt.

5. Magnetschaltkreis nach Anspruch 4, weiter umfassend eine zweite Öffnung (16b2) in der Spannplatte (12b) und mindestens einen zweiten Rückhaltestab (13b2), der identisch ist mit dem Rückhaltestab (13b1), der mit einer Öffnung der mindestens einen Spannplatte zusammenwirkt, um die magnetischen Bleche gemäß der axialen Richtung (A1) komprimiert zu halten, wobei sich die Stäbe gemäß jeweiligen Richtungen senkrecht zu der radialen Richtung und einander entgegengesetzt einfügen.

6. Magnetschaltkreis nach einem der Ansprüche 1 bis 5, wobei der Rückhaltestab (23, 33) zwischen seinen zwei Enden einen Mittelteil (23c, 33b) umfasst und jedes magnetische Blech mindestens eine Einbuchtung (26, 36) umfasst, die ausgestaltet ist, den Mittelteil (23c, 33b) aufzunehmen, sodass die magnetischen Bleche in der radialen Richtung und in Rotation gemäß der axialen Richtung (A2, A3) blockiert werden.

7. Magnetschaltkreis nach Anspruch 6, wobei der Rückhaltestab (23, 230, 231) an mindestens einem seiner Enden eine Ausnehmung (23b, 230b, 231b) umfasst, die mit einer Öffnung (22a) der Spannplatte zusammenwirkt, um die magnetischen Bleche gemäß der axialen Richtung (A2) komprimiert zu halten, und umfassend mindestens einen Keil (24, 240, 241), der so ausgestaltet ist, dass, wenn der Keil gemäß der axialen Richtung (A2) zwischen dem Rückhaltestab und einem Rand der Öffnung hineingedrückt ist, der Mittelteil des Stabs gegen eine Kante der Einbuchtung (26) anschlägt und der Boden der Ausnehmung mit der Spannplatte nicht in Kontakt ist, sodass die magnetischen Bleche (21) gemäß einer radialen Richtung und in Rotation gemäß der axialen Richtung (A2) blockiert sind.

8. Magnetschaltkreis nach Anspruch 7, wobei der Rückhaltestab (23, 230) weiter an seinem Ende eine Fase (23a, 230a) umfasst und der Keil (24, 240) eine schräge Fläche (24a, 240a) umfasst, die mit der Fase zusammenwirkt.

9. Magnetschaltkreis nach Anspruch 8, wobei die schräge Fläche (24a), die Fase (23a), die Ausnehmung (23b), die Einbuchtungen (26) und das Profil des Mittelteils (23c) so ausgestaltet sind, dass der Keil (24) von außerhalb des Magnetschaltkreises (CM2) zwischen der Fase (23a) und einer Kante der Öffnung (22a) hineingedrückt wird.

10. Magnetschaltkreis nach Anspruch 8, wobei die schräge Fläche (240a), die Fase (230a), die Ausnehmung (230b), die Einbuchtungen (26) und das Profil des Mittelteils (230c) so ausgestaltet sind, dass der Keil (240) von innerhalb des Magnetschaltkreises zwischen der Fase (230a) und einer Kante der Öffnung (22a) hineingedrückt wird.

11. Magnetschaltkreis nach Anspruch 6, weiter umfassend Schrauben (200), wobei der Rückhaltestab (232) an mindestens einem seiner Enden eine Ausnehmung (232b) umfasst, die mit einer Öffnung (220a) der Spannplatte zusammenwirkt, um die magnetischen Bleche (21) gemäß der axialen Richtung (A2) komprimiert zu halten, wobei die Platte (220) mindestens eine Befestigungszone (220b) umfasst, die Gewindebohrungen umfasst, die mit den Schrauben zusammenwirken, sodass, wenn die Schrauben in die Gewindebohrungen geschraubt werden, sich die Ausnehmung (232b) auf einer Kante der Öffnung (220a) gegenüber der Zone (220b) einfügt.

12. Magnetschaltkreis nach einem der Ansprüche 6 bis 11, wobei mindestens der Mittelteil des Rückhaltestabs ein rechteckiges, zylindrisches, quadratisches oder trapezförmiges Profil aufweist.

13. Rotor für eine umlaufende, elektrische Maschine, wobei der Rotor einen Magnetschaltkreis nach einem der Ansprüche 1 bis 12 umfasst.

14. Stator für eine umlaufende, elektrische Maschine, wobei der Stator einen Magnetschaltkreis nach einem der Ansprüche 1 bis 12 umfasst.

15. Umlaufende, elektrische Maschine, umfassend einen Rotor und einen Stator, wobei mindestens einer von Rotor und Stator einen Magnetschaltkreis nach einem der Ansprüche 1 bis 12 umfasst.

16. Verfahren zur Herstellung eines Magnetschaltkreises für ein Element einer umlaufenden, elektrischen Maschine, umfassend eine Vielzahl von Stapeln magnetischer Bleche (11, 21, 31), Rückhaltestäbe (13, 23, 33), zwei Spannplatten (12, 22, 32), wobei mindestens eine Spannplatte so viele Öffnungen (16, 22a, 32a) wie Stäbe umfasst, und Haltemittel, die ausgestaltet sind, die magnetischen Bleche zu komprimieren und die Bleche gemäß einer axialen Richtung zu blockieren, wobei die Haltemittel mindestens ein Ende von jedem Rückhaltestab und die Öffnungen der mindestens einen Spannplatte umfassen, wobei das mindestens eine Ende von jedem Rückhaltestab ausgestaltet ist, sich in die Öffnung einzufügen, wobei das Verfahren einen Schritt des axialen Komprimierens, bei dem die magnetischen Bleche komprimiert werden, und einen Schritt des Montierens umfasst, bei dem mindestens ein Ende der Rückhaltestäbe in eine Öffnung eingefügt wird, **dadurch gekennzeichnet, dass** mindestens ein Ende jedes Stabs eine Ausnehmung (23b, 33a) umfasst, die mit einer Öffnung der mindestens einen Spannplatte zusammenwirkt, um die magnetischen Bleche gemäß der axialen Richtung (A1, A2, A3) komprimiert zu halten.

17. Verfahren nach Anspruch 16, wobei jedes komprimierte magnetische Blech mindestens eine Einbuchtung (26) umfasst und jeder Rückhaltestab an jedem seiner Enden die Ausnehmung (23b) und eine Fase (23a) und zwischen seinen zwei Enden einen Mittelteil (23c) umfasst, und Keile (24), wobei beim Schritt des Montierens weiter der Mittelteil so angeordnet wird, dass er teilweise in der Einbuchtung ist und eine Seite von jeder der zwei Ausnehmungen mit einer der zwei Platten in Kontakt ist, und umfassend einen Schritt, bei dem die Keile gemäß einer axialen Richtung hineingedrückt werden, bis der Mittelteil des Stabs gegen eine Kante der Einbuchtung blockiert wird.

18. Verfahren nach Anspruch 16, wobei jedes komprimierte magnetische Blech mindestens eine Einbuchtung (36) umfasst und jeder Rückhaltestab (33) an jedem seiner Enden die Ausnehmung (33a) und zwischen seinen zwei Enden einen Mittelteil (33b) umfasst, und Keile (37), wobei beim Schritt des Montierens weiter der Mittelteil so angeordnet wird, dass er teilweise in der Einbuchtung ist und eine Seite von jeder der zwei Ausnehmungen mit einer der zwei Platten in Kontakt ist, und umfassend einen Schritt, bei dem die Keile hineingedrückt werden, bis der Mittelteil des Stabs gegen eine Kante (36a) der Einbuchtung blockiert wird.

19. Verfahren nach einem der Ansprüche 16 bis 18, wobei der Schritt des Montierens und des Verriegelns wiederholt wird, bis alle Stäbe mit den Spannplatten verbunden sind.

20. Verfahren zur Herstellung eines Stators einer umlaufenden, elektrischen Maschine, umfassend ein Gehäuse und einen Magnetschaltkreis nach einem der Ansprüche 16 bis 19, **dadurch gekennzeichnet, dass** es einen Schritt des Stator-Montierens umfasst, bei dem der Magnetschaltkreis und das Gehäuse unzerlegbar miteinander verbunden werden.

21. Verfahren zur Herstellung eines Rotors einer umlaufenden, elektrischen Maschine, umfassend eine Welle und einen Magnetschaltkreis nach einem der Ansprüche 16 bis 19, **dadurch gekennzeichnet, dass** es einen Schritt des Rotor-Montierens umfasst, bei dem der Magnetschaltkreis und die Welle unzerlegbar miteinander verbunden werden.

## Claims

1. A magnetic circuit for an element of a rotating electric machine comprising a plurality of stacks of magnetic sheets (11, 21, 31) compacted in an axial direction (A1, A2, A3) and clamped between two clamping plates (12, 12a, 12b, 22, 32, 220) connected by removable retaining bars (13, 13a, 13b1, 13b2, 23, 33, 230, 231, 232), at least one clamping plate comprising as many openings (16, 16a, 16b1, 16b2, 22a, 32a, 220a) as removable retaining bars, and holding means configured to compact the magnetic sheets and immobilise the sheets in an axial direction, the holding means comprising at least one end of each retaining bar and the openings of the at least one clamping plate, the at least one end of each retaining bar being configured to cooperate so that the end of each retaining bar fits over a rim of the opening, **characterised in that** at least one end of the bar includes a groove (17, 23b, 33a, 231b, 230b, 232b) cooperating with an opening of the at least one clamping plate for holding the magnetic sheets compacted in the axial direction (A1, A2, A3).

2. The magnetic circuit according to claim 1, wherein at least one end of the bar comprises an insert and screwed or welded so that the bar and the insert form a hook cooperating with an opening of the at least one clamping plate for holding the magnetic sheets compacted in the axial direction (A1, A2, A3).

3. The magnetic circuit according to one of claims 1 and 2, wherein the bar (13, 23, 33) fits in a radial direction over a rim of the opening (16, 22a, 32a).

4. The magnetic circuit according to one of claims 1 and 2, wherein the bar (13a, 13b1, 13b2) fits in a direction perpendicular to the radial direction over a rim of the opening (16a, 16b1, 16b2).

5. The magnetic circuit according to claim 4 further including a second opening (16b2) in the clamping plate (12b) and at least a second retaining bar (13b2) identical to the retaining bar (13b1) cooperating with an opening of the at least one clamping plate for holding the magnetic sheets compacted in the axial direction (A1), the bars fitting together in respective directions perpendicular to the radial direction and opposite to each other.

6. The magnetic circuit according to any one of claims 1 to 5, wherein the retaining bar (23, 33) comprises between its two ends a central part (23c, 33b) and each magnetic sheet comprises at least one notch (26, 36) configured to receive the central part (23c, 33b) so that the magnetic sheets are immobilised in the radial direction and rotating in the axial direction (A2, A3).

7. The magnetic circuit according to claim 6, wherein the retaining bar (23, 230, 231) comprises at least at one of its ends a groove (23b, 230b, 231b) cooperating with an opening (22a) of the clamping plate for holding the magnetic sheets compacted in the axial direction (A2), and comprising at least one wedge (24, 240, 241) configured so that when the wedge is driven in the axial direction (A2) between the retaining bar and an edge of the opening, the central part of the bar abuts against an edge of the notch (26) and the bottom of the groove is not in contact with the clamping plate so that the magnetic sheets (21) are immobilised in a radial direction and rotating in the axial direction (A2).

8. The magnetic circuit according to claim 7, wherein the retaining bar (23, 230) further comprises at its end a chamfer (23a, 230a) and the wedge (24, 240) includes an inclined face (24a, 240a) cooperating with the chamfer.

9. The magnetic circuit according to claim 8, wherein the inclined face (24a), the chamfer (23a), the groove (23b), the notches (26) and the profile of the central part (23c) are configured so that the wedge (24) is driven from the outside of the magnetic circuit (CM2) between the chamfer (23a) and an edge of the opening (22a).

10. The magnetic circuit according to claim 8, wherein the inclined face (240a), the chamfer (230a), the groove (230b), the notches (26) and the profile of the central part (230c) are configured so that the wedge (240) is driven from the inside of the magnetic circuit between the chamfer (230a) and an edge of the opening (22a).

11. The magnetic circuit according to claim 6, further including screws (200), the retaining bar (232) comprising at least at one of its ends a groove (232b) cooperating with an opening (220a) of the clamping plate for holding the magnetic sheets (21) compacted in the axial direction (A2), the plate (220) comprising at least one fastening area (220b) comprising internal threads cooperating with the screws so that when the screws are screwed into the internal threads, the groove (232b) fits over an edge of the opening (220a) opposite the area (220b).

12. The magnetic circuit according to any one of claims 6 to 11, wherein at least the central part of the retaining bar has a rectangular, cylindrical, square or trapezoidal profile.

13. A rotor for a rotating electric machine, the rotor comprising a magnetic circuit according to any one of claims 1 to 12.

14. A stator for a rotating electric machine, the stator comprising a magnetic circuit according to any one of claims 1 to 12.

15. A rotating electric machine comprising a rotor and a stator, the at least one of said rotor and stator comprising a magnetic circuit according to any one of claims 1 to 12.

16. A method for producing a magnetic circuit for an element of a rotating electric machine comprising a plurality of stacks of magnetic sheets (11, 21, 31), retaining bars (13, 23, 33), two clamping plates (12, 22, 32), at least one clamping plate comprising as many openings (16, 22a, 32a) as bars, and holding means configured to compact the magnetic sheets and immobilise the sheets in an axial direction, the holding means comprising at least one end of each retaining bar and the openings of the at least one clamping plate, the at least one end of each retaining bar being configured to fit into the opening, the method comprising an axial compaction step wherein the magnetic sheets are compacted, and an assembly step wherein at least one end of the retaining bars is fitted into an opening, **characterised in that** at least one end of each bar includes a groove (23b, 33a) cooperating with an opening of at least one clamping plate for holding the magnetic sheets compacted in the axial direction (A1, A2, A3).

17. The method according to claim 16, wherein each compacted magnetic sheet includes at least one notch (26) and each retaining bar comprises at each of its ends the groove (23b) and a chamfer (23a) and between its two ends a central part (23c), and wedges (24), wherein during the assembly step the central part is further disposed so that it is partially in the notch and one side of each of the two grooves is in contact with one of the two plates, and including a step during which the wedges are driven in an axial direction until the central part of the bar is immobilised against an edge of the notch.

18. The method according to claim 16, wherein each compacted magnetic sheet including at least one notch (36) and each retaining bar (33) comprising at each of its ends the groove (33a) and between its two ends a central part (33b), and wedges (37), wherein during the assembly step, the central part is further disposed so that it is partially in the notch and one side of each of the two grooves is in contact with one of the two plates, and including a step during which the wedges are driven until the central part of the bar is immobilised against an edge (36a) of the notch.

19. The method according to one of claims 16 to 18, wherein the mounting and locking step is repeated until all the bars are connected to the clamping plates.

20. A method for producing a stator for a rotating electric machine comprising a casing and a magnetic circuit according to any one of claims 16 to 19, **characterised in that** it comprises a stator assembly step wherein the magnetic circuit and the casing are secured in a removable manner.

21. A method for producing a rotor for a rotating electric machine comprising a shaft and a magnetic circuit according to any one of claims 16 to 19, **characterised in that** it comprises a rotor assembly step wherein the magnetic circuit and the shaft are secured in a removable manner.
